# EUROPEAN PATENT APPLICATION

(11) **EP 1 849 629 A2**
(43) Date of publication of application: **31.10.2007**
(21) Application number: 07008660.8
(22) Date of filing: 27.04.2007
(51) Int. Cl.: B60C 23/04

(54) **Tire information detecting device**

(30) Priority: 28.04.2006 JP 2006124992
(71) Applicant: ALPS ELECTRIC CO., LTD., Tokyo 145-8501 (JP)
(72) Inventor: Yamadaya, Hideki, Tokyo 145-8501 (JP)
(74) Representative: Klunker . Schmitt-Nilson . Hirsch

(57) **Abstract**

There is provided a tire information detecting device capable of accurately detecting plural measured values which include a tire pressure and temperature. The tire information detecting device includes a transponder 10 which is mounted on a tire of a vehicle and a controller which is provided for a vehicle body and the transponder 10 comprise a diode 12 which performs a modulation and a demodulation on a signal which is used to transmit and receive to and from the controller, a pressure measuring unit 20 which measures a tire pressure, a detecting resonance circuit 17 which is connected between the diode 12 and the pressure measuring unit 20 and resonates in accordance with a signal from the controller, and a resonance circuit 30 which resonates in accordance with the signal from the controller and controls a connection between the pressure measuring unit 20 and the detecting resonance circuit 17 with the resonance of the resonance circuit 30.

## Description

### BACKGROUND OF THE INVENTION

### 1. Field of the Invention

The present invention relates to a tire information detecting device, and more particularly, to a tire information detecting device capable of detecting a tire information including a tire pressure used in a vehicle or the like.

### 2. Description of the related art

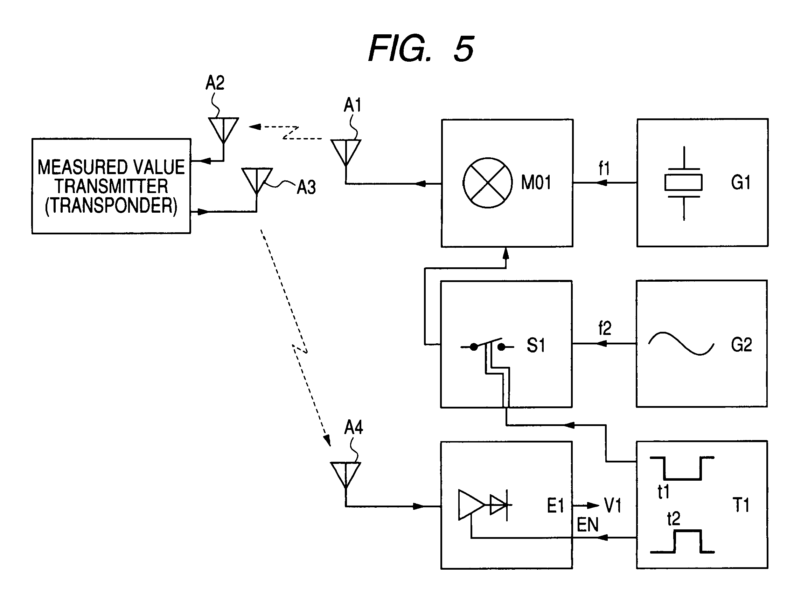

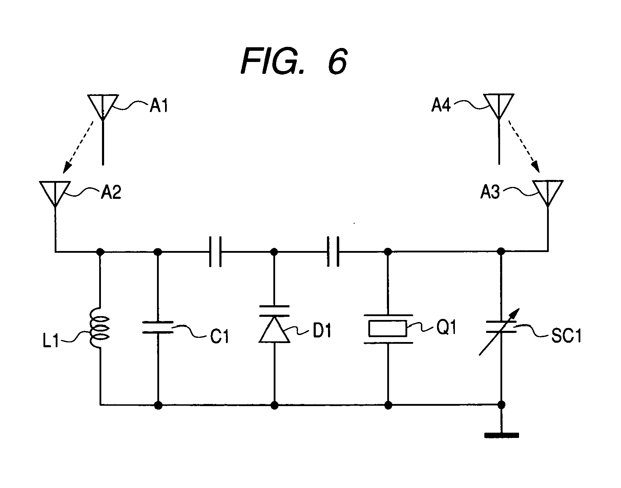

A known radio transmission device which wirelessly transmits and estimates a measured value such as a tire pressure used in a vehicle or the like to a controller disposed in a main body of a vehicle for the purpose of, for example, an alarm message for a driver is suggested (for example, see Figs. 5 and 6 of U.S. Patent No. 6378360 B1). In such the radio transmission device, a controller as shown in Fig. 5 is provided for the main body of the vehicle and a measured value transmitter as shown in Fig. 6 is provided inside the tire as well.

As shown in Fig. 5, the controller includes a carrier oscillator G1 generating a carrier wave (f1) of 2.4 GHz, a modulator M01, and an oscillator G2 outputting a modulation oscillation signal. The oscillator G2 outputs a oscillation signal of a frequency (f2) similar to a resonance frequency of a resonator of a transponder described below to the modulator M01. A carrier wave from the oscillator G1 is amplitude-modulated by the oscillation signal of the oscillator G2, and an amplitude-modulated high-frequency signal of 2.4 GHz is amplified by an amplifier (not shown), so that it is radiated from an antenna similar to the tire A1.

Additionally, the controller includes a switch S1 which switches an amplitude modulation by the modulator M01, a receiver E1 which receives a high-frequency signal radiated from the transponder and calculates a measured value (V1) of a tire pressure or the like, and a timer T1 which controls a switching time of the switch S1 and a state of the receiver E1. An amplitude modulation of the carrier wave is switched by the timer T1, and then for a certain time the amplitude-modulated high-frequency signal is transmitted, so that a non-modulated carrier wave is transmitted when the amplitude modulation is stopped at a time point t1. The receiver E1 becomes active at a time point t2 lower than the time point t1 by about 1 ms and receives a high-frequency signal via an antenna A4 from the transponder.

As shown in Fig. 6, the transponder includes a low-pass filter L1/C1, a varactor diode D1 (hereinafter, it will be simply referred to as a diode) which functions as a modulator and demodulator, a capacitive pressure sensor SC1 which varies with the tire pressure, and a resonator having a quartz-crystal resonator Q1 which is excited by a frequency component included in a high-frequency signal from the controller. In the high-frequency signal from the controller, the carrier wave of 2.4GHz is removed by the low-pass filter L1/C1 and demodulated by the diode D1. Accordingly, a signal which is the same as the oscillation signal of the oscillator G2 is extracted. Sine the resonance frequency of the resonator is similar to the oscillation signal of the oscillator G2, the resonance frequency is excited by a signal generated therefrom. According to such the excitation, the resonance-frequency signal occurs. Additionally, in the resonance frequency of the resonator, since a capacity of the capacitive pressure sensor SC1 varies with the tire pressure, the resonance-frequency signal occurring therefrom is influenced by the effect.

As described above, after the controller transmits the amplitude-modulated high-frequency signal, the controller stops the amplitude modulation and transmits a non-modulated carrier wave. The resonator continuously oscillates for about 1 ms or more even when the amplitude modulation is stopped. Accordingly, the non-modulated carrier wave from the controller is amplitude-modulated with the resonance-frequency signal of the resonator by the diode D1 and then radiated from an antenna A3. In the receiver E1, the amplitude-modulated high-frequency signal is received via an antenna A4 and the resonance-frequency signal is extracted via a demodulator (not shown in the drawings) or the like so that it is possible to calculate the measured value (V1) of the tire pressure or the like.

Especially, in the radio transmission device disclosed in U.S. Patent No. 6378360 B1, a plurality of resonators are additionally received in transponders, for example, it is possible to transmit the signal of measured values of the tire temperature and the like and calculate the measured value in the controller.

However, in the known radio transmission device, when plural resonators are received in a transponder and plural measured values of a tire pressure, a tire temperature, and the like are detected, a temperature characteristic or a temporal degradation characteristic of each of the resonators is different from each other, and thus an error occurs in the measured value. Therefore, there is a problem that the measured value is not able to be accurately detected.

Specifically, when the tire pressure is measured, a resonance frequency of a resonator for measuring a pressure gets influenced by both a pressure and a temperature, whereby the temperature value is obtained from the resonance frequency of the resonator for measuring a temperature in the other side. Although the pressure is obtained without the temperature influence by using the temperature value, when the temperature characteristic or the temporal degradation characteristic of both of the resonators is different from each other, it is impossible to accurately perform the correction.

### SUMMARY OF THE INVENTION

The present invention is contrived to solve the above-mentioned problems. It is an object of the invention to provide a tire information detecting device capable of accurately detecting the plural measured values including the tire pressure and the tire pressure and tire temperature.

According to an aspect of the invention, there is provided a tire information detecting device including a measured value transmitter mounted on a tire of a vehicle and a controller disposed on a main body of the vehicle so as to transmit and receive a signal to and from the measured value transmitter. The measured value transmitter includes an antenna, a modulator and a demodulator used to transmit and receive signal to and from the controller, a pressure measuring unit for measuring a tire pressure, a detecting resonance circuit which is connected between the modulator and the pressure measuring unit and resonates in accordance with the signal from the controller, a connecting resonance circuit which oscillates in accordance with the signal from the controller, and a control circuit for controlling a connection between the pressure measuring unit and the detecting resonance circuit with the resonance of the connecting resonance circuit.

According to the above-described configuration, a connection between the pressure measuring unit and the detecting resonance circuit is controlled in accordance with a signal from the controller by the control circuit. Accordingly, the connection between the detecting resonance circuit and the pressure measuring unit is switched over, whereby the resonance frequency of the detecting resonance circuit is estimated depending on the respective situation by using the controller, whereby plural resonance circuits, for example, the quartz-crystal resonators are not necessary, so that single detecting resonance circuit can calculate both a tire temperature and a tire pressure, thereby accurately detecting the tire pressure and the tire temperature. In addition, the connection between the pressure measuring unit and the detecting resonance circuit is controlled with the resonance of the connecting resonance circuit in the control circuit, whereby the resonance of the connecting resonance circuit is controlled by the controller, thereby controlling the connection between the pressure measuring unit and the detecting resonance circuit.

In the tire information detecting device, the control circuit may include a switching element which is connected to an input-output terminal of the pressure measuring unit in a first signal line in which the detecting resonance circuit and the pressure measuring unit are connected to each other, the switching element becomes an ON state so as to connect the pressure measuring unit to the detecting resonance circuit with the resonance of the connecting resonance circuit. Additionally, it is preferable that the switching element becomes an OFF state so as to disconnect the pressure measuring unit from the detecting resonance circuit as the connecting resonance circuit does not resonate. In this case, the resonance of the connecting resonance circuit is controlled by the controller, so that an ON and OFF of the switching element is switched over and it is possible to simply control the connection between the pressure measuring unit and the detecting resonance circuit.

In the tire information detecting device, the measured value transmitter may transmit a signal of the resonance frequency of the detecting resonance circuit to the controller as the switching element is an OFF state. Additionally, it is possible to transmit a signal of the resonance frequency of the detecting resonance circuit in accordance with a measurement result of the pressure measuring unit to the controller as the switching element is an OFF state. In this case, since the resonance frequency which is transmitted to the controller varies in accordance with the ON and OFF of the switching element, it is possible for single detecting resonance circuit to calculate the tire temperature and the tire pressure by estimating such the resonance frequency.

In the tire information detecting device, the measured value transmitter may include a second signal line which bypasses the first signal line between the input-output terminal of the pressure measuring unit side of the modulator and the input-output terminal of the detecting resonance circuit side of the switching element in the first signal line and an end of the connecting resonance circuit may be connected to the second signal line. In this case, the ON and OFF of the switching element can be switched over by the connecting resonance circuit of which an end of thereof is connected to the second signal line, whereby this does not influence a signal which communicates via the first signal line, thereby controlling the connection between the pressure measuring unit and the detecting resonance circuit.

In the tire information detecting device, the connecting resonance circuit may be constituted of an LC resonance circuit. In this case, it is possible to reduce an increase in cost. Additionally, the resonance circuit may be constituted of a piezoelectric resonator.

In the tire information detecting device, the switching element may be constituted of a diode. In this case, it is possible to reduce a cost which is necessary for the switching element. In addition, the switching element can be constituted of a FET.

In the tire information detecting device, the controller may transmit a signal which enables the detecting resonance circuit and the connecting resonance circuit to resonate to the measured value transmitter. Additionally, the resonance-frequency signal of the detecting resonance circuit and the resonance-frequency signal of the detecting resonance circuit in accordance with a measurement result of the pressure measuring unit are received from the measured value transmitter, and the tire temperature and the tire pressure may be calculated in accordance with the resonance frequency of the detecting resonance circuit extracted from the received signal. In this case, it is possible to calculate both the tire temperature and the tire pressure by using a single detecting resonance circuit, thereby accurately detecting the tire pressure and the tire temperature.

In the tire information detecting device, the controller may calculate the tire temperature in accordance with a difference in frequency between a frequency of a signal which enables the detecting resonance circuit to resonate and the resonance frequency which is extracted from the received signal in accordance with the signal.

In the tire information detecting device, the controller may calculate the tire pressure in accordance with a difference in frequency between the resonance frequency extracted from the received signal in accordance with a signal which enables the detecting resonance circuit to resonate and the resonance frequency extracted from the received signal in accordance with a signal which enables the detecting resonance circuit to resonate in accordance with the measurement result of the pressure measuring unit. Accordingly, it is possible to adequately calculate the tire pressure except for a temperature influence by using single detecting resonance circuit, thereby more accurately detecting the pressure.

In the tire information detecting device, the detecting resonance circuit may include the quartz-crystal resonator. In this case, an oscillation of a resonance signal becomes stable, and thus it is possible to stably detect the tire temperature and the tire pressure.

According to the above-mentioned configurations of the invention, it is possible to more accurately detect plural measured values including a tire pressure and a tire temperature.

### BRIEF DESCRIPTION OF THE DRAWINGS

Fig. 1 is a diagram illustrating an example of a circuit configuration of a transponder constituting a tire information detecting device according to an embodiment of the invention.
Fig. 2 is a drawing illustrating a difference in frequency between a resonance frequency extracted from a received signal of the transponder and a frequency of an oscillation signal from a controller.
Fig. 3 is a chart illustrating a time of a signal communication.
Fig. 4 is a drawing illustrating a modified example of the circuit configuration of the transponder.
Fig. 5 is a diagram illustrating a schematic circuit configuration of a controller constituting the known tire information detecting device.
Fig. 6 is a diagram illustrating a schematic circuit configuration of a transponder constituting the known tire information detecting device.

### DESCRIPTION OF THE PREFERRED EMBODIMENTS

Hereinafter, an embodiment of the invention will be described in detail with reference to the attached drawings. Additionally, a tire information detecting device according to the embodiment includes a controller disposed on a main body of a vehicle and a measured value transmitter (hereinafter, it will be referred to as a transponder) disposed inside a tire in the same way as the known tire information detecting device.

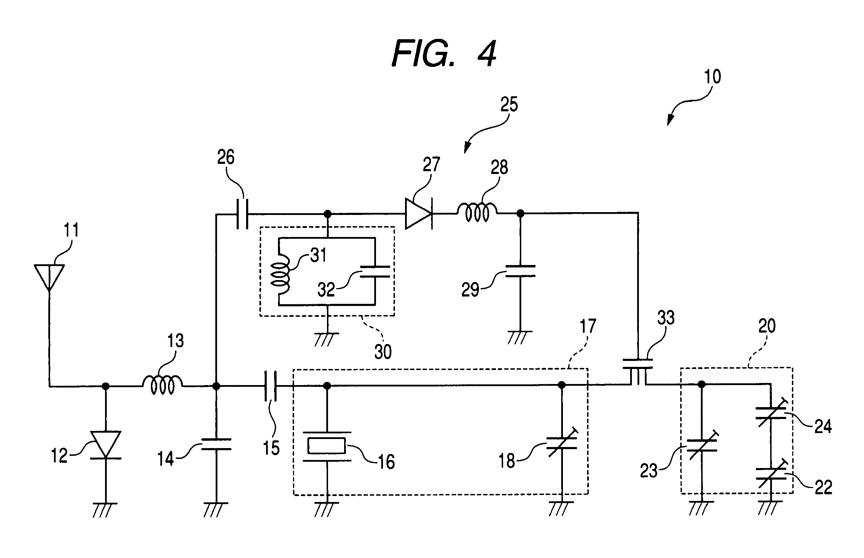

In the tire information detecting device according to the embodiment, especially, a configuration of the transponder of the invention is different from that of the known tire information detecting device. Accordingly, in the following, the configuration of the transponder which constitutes the tire information detecting device according to the embodiment will be described in detail. In addition, the difference with respect to the configuration of the controller will be appropriately described with reference to components shown in Fig. 4.

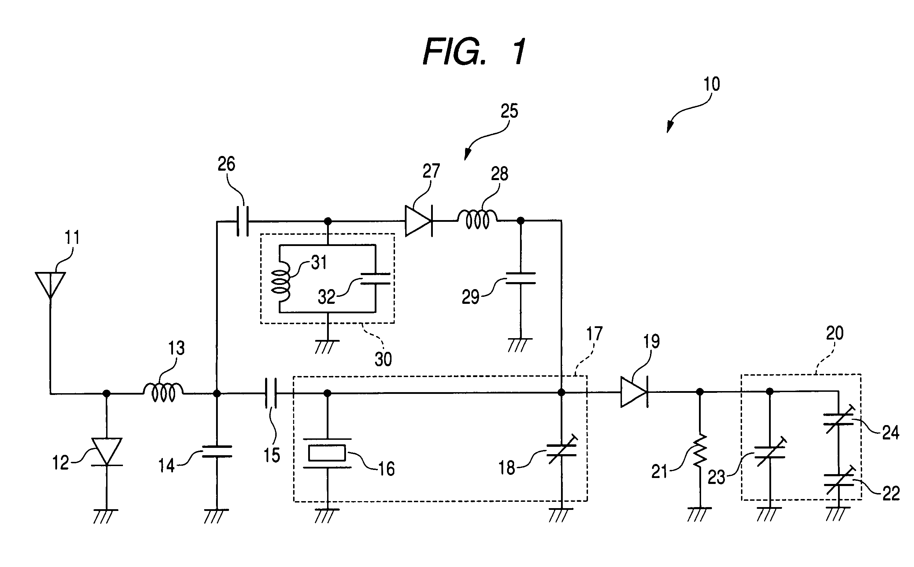

Fig. 1 is a diagram illustrating an example of a circuit configuration of the transponder constituting the tire information detecting device according to the embodiment.

As shown in Fig. 1, a transponder 10 according to the embodiment includes an antenna 11 for a transmitting and receiving, and the antenna 11 is connected to a diode 12. In the diode 12, an anode is connected to an input-output terminal of the antenna 11, and additionally a cathode is connected to a ground. Meanwhile, one end of an inductor 13 is connected to the anode of the diode 12, and the other end thereof is connected to the ground with a capacitor 14 disposed therebetween. Additionally, the inductor 13 and the capacitor 14 include a low-pass filter. The low-pass filter has a frequency characteristic which is able to remove a carrier wave of 2.4 GHz. The diode 12 and the low-pass filter constitute a demodulator. The diode 12 functions as a modulator as well.

An end of the inductor 13 is connected to a quartz-crystal resonator 16 which detects a tire temperature and a tire pressure with a capacitor 15 disposed therebetween. One end of the quartz-crystal resonator 16 is connected to one side of an electrode of the capacitor 15, and additionally the other end thereof is connected to the ground. In addition, in the embodiment, a self-resonant frequency of the quartz-crystal resonator 16 is set by 9.800 MHz. In order to adjust resonance frequency of the quartz-crystal resonator 16, one side of an electrode of a variable capacitor 18 is connected to the quartz-crystal resonator 16, and the other side of the variable capacitor 18 is connected to the ground. Additionally, the quartz-crystal resonator 16 and the variable capacitor 18 constitute a detecting resonance circuit 17.

One side of an electrode of the quartz-crystal resonator 16 is connected a pressure measuring unit 20 with a diode 19 which functions as a switching element disposed therebetween. The pressure measuring unit 20 is constituted of a pressure sensor 22 and two trimmer capacitors 23 and 24 which absorb a non-uniform detected result of the pressure sensor 22. The pressure sensor 22 is constituted of a variable capacitor of which a capacity varies in accordance with a detected pressure. In the diode 19, an anode is connected to one side of an electrode of the variable capacitor 18, and additionally a cathode is connected to one end of a resistor 21 and one side of an electrode of the trimmer capacitors 23 and 24. The other end of the resistor 21 and the other side of an electrode of the trimmer capacitor 23 is connected to the ground, and additionally the other side of an electrode of the trimmer capacitor 24 is connected to the ground with the pressure sensor 22 disposed therebetween. Besides, the resistor 21 is an element which enables the diode 19 to be turned on.

Meanwhile, the anode of the diode 19 is connected to a driving circuit 25 which enables the diode 19 to be turned on and off. The driving circuit 25 is disposed between one end of the inductor 13 and the anode of the diode 19 and connected in parallel to the quartz-crystal resonator 16. In the driving circuit 25, one end of the inductor 13 is connected to a diode 27 with a capacitor 26 disposed therebetween. In a diode 27, an anode is connected to one side of an electrode of the capacitor 26, and additionally a cathode is connected to one end of an inductor 28. The other end of the inductor 28 is connected to the ground with a capacitor 29 disposed therebetween. In addition, the inductor 28 and the capacitor 29 constitute a low-pass filter. The low-pass filter converts a resonance wave acquired from a resonance circuit 30 to be described below into a direct current.

In addition, in the driving circuit 25, a middle point between the capacitor 26 and the diode 27 is connected to the resonance circuit 30 functioning as a connecting resonance circuit. The resonance circuit 30 is constituted of an inductor 31 and the capacitor 26, that is, an LC resonance circuit. The middle point is connected in parallel to one end of the inductor 31 and one side of an electrode of a capacitor 32, and additionally the other end of the inductor 31 and the other side of the electrode of the capacitor 32 are connected to the ground. In addition, in the embodiment, a parallel resonance frequency Z of the resonance circuit 30 is set by 10.800 MHz. The resonance frequency of the resonance circuit 30 can be adequately modified if it does not resonate when the quartz-crystal resonator 16 resonates. When the resonance circuit 30 resonates, a signal of the resonance frequency is detected by the diode 27, and then an electric charge is charged in the capacitor 29 via the inductor 28. In addition, the driving circuit 25 and the diode 19 constitute a control circuit which controls a connection of the pressure measuring unit 20 and the quartz-crystal resonator 16.

In the transponder 10 according to the embodiment, a resonance frequency of the quartz-crystal resonator 16 is changed in terms of the driving circuit 25 by switching the on and off state of the diode 19. Specifically, as the driving circuit 25 enables the diode 19 to be turned off, the quartz-crystal resonator 16 forms a resonance circuit together with the variable capacitor 18, and additionally as the diode 19 enables to be turned on, the quartz-crystal resonator 16 resonates in a state where the resonance circuit is connected to the pressure measuring unit 20. In the former, a resonance frequency of the quartz-crystal resonator 16 is influenced by only the tire temperature. On the other hand, in the latter, the resonance frequency of the quartz-crystal resonator 16 is influenced by not only the tire temperature but also the tire pressure. In the controller of the tire information detecting device according to the embodiment, a resonance of the resonance circuit 30 is controlled by switching a oscillation signal performing an amplitude modulation with respect to the carrier wave, whereby an on and off of the diode 19 is switched so as to detect only the tire temperature or the tire pressure plus the tire temperature.

Specifically, in the controller according to the embodiment, different from the known tire information detecting device (see Fig. 4), an oscillator G2 generates a oscillation signal of a frequency (f2) similar to the resonance frequency of the quartz-crystal resonator 16 and a oscillation signal of a frequency (f3) similar to the resonance frequency of the resonance circuit 30. In detail, a oscillation signal having a mean frequency of 9.800 MHz and a oscillation signal having a mean frequency of 10.800MHz are generated, and the carrier wave (f1) is amplitude-modulated by those oscillation signals. In addition, a signal of which the carrier wave (f1) is amplitude-modulated forms a signal for the purpose of allowing the quartz-crystal resonator 16 to resonate by using the former oscillation signal, and the signal of which the carrier wave (f1) is amplitude-modulated forms a signal for the purpose of allowing the resonance circuit 30 to resonate by using the latter oscillation signal.

In the controller according to the embodiment, it is same as the known controller that an amplitude modulation is switched over by a switch S1. However, in the controller according to the embodiment, different from the known tire information detecting device, a time between an amplitude modulation by using the oscillation signal of the frequency (f2) and an amplitude modulation by using the oscillation signal of the frequency (f3) is properly switched over. Specifically, an amplitude modulation of the carrier wave is performed by only the oscillation signal of the frequency (f2), and then the amplitude modulation is stopped at a time point t1 as shown in Fig. 4 (Accordingly, a non-modulated carrier wave is radiated). After that, an amplitude modulation is performed by the oscillation signals of both the frequency (f2) and the frequency (f3), and then only the amplitude modulation by using the oscillation signal of the frequency (f2) is stopped at a time point t3 (not shown in Fig. 4) (past a certain time from the time point t1) (Accordingly, a high-frequency signal which is amplitude-modulated by using the oscillation signal of the frequency (f3) is radiated). In addition, the reason that not the non-modulated carrier wave but the high-frequency signal which is amplitude-modulated by using the oscillation signal of the frequency (f3) is radiated is that it is necessary to hold an ON state of the diode 19 by allowing the resonance circuit 30 to resonate when the tire pressure is measured.

In the next, an operation in the case where the tire temperature and the tire pressure of the tire information detecting device including the above-described configuration is measured will be described. In the tire information detecting device according to the embodiment, first of all, the tire temperature is measured, and then the tire pressure is measured.

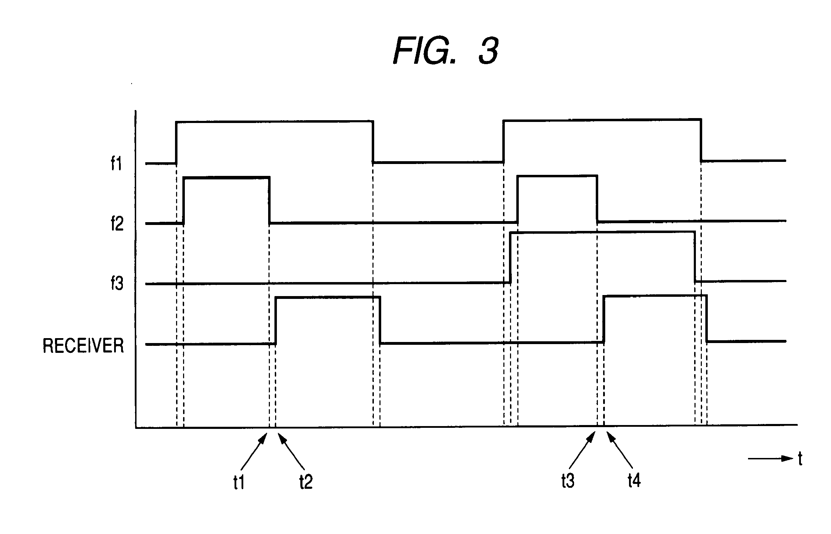

When the tire temperature is measured, in the controller, the carrier wave (f1) of 2.4GHz is amplitude-modulated by using the oscillation signal (the oscillation signal having the mean frequency of 9.800 MHz) of the frequency (f2) generated by the oscillator G2, and then the amplitude-modulated high-frequency signal is radiated from an antenna A1. Then, at the time point t1 as shown in Fig. 3, an amplitude modulation is stopped, and then at the time point t2, a receiver E1 becomes an active state. Additionally, at the time of the amplitude modulation is stopped, a non-modulated carrier wave is radiated from the antenna A1.

In the transponder 10, the high-frequency signal of 2.4GHz which is amplitude-modulated by using the controller is detected by the diode 12, and also the carrier wave of 2.4GHz is removed by the low-pass filter (the coil 13 and the capacitor 14). Accordingly, a oscillation signal same as the oscillation signal of the frequency (f2) is extracted. In the quartz-crystal resonator 16, the resonance frequency is similar to the frequency of the oscillation signal of the frequency (f2), and thus it is excited by the signal generated therefrom. Accordingly, a resonance frequency of the quartz-crystal resonator 16 occurs. At this time, the resonance circuit 30 does not resonate due to the high-frequency signal from the controller, so the diode 19 remains to be turned off. Because of this, the resonance frequency of the quartz-crystal resonator 16 is influenced by only the tire temperature.

In the controller, when an amplitude modulation is stopped and a non-modulated carrier wave is radiated, in the transponder 10, the quartz-crystal resonator 16 continuously oscillates for about 1 ms or less from when the amplitude modulation is stopped. Accordingly, the non-modulated carrier wave from the controller is amplitude-modulated by using the diode 12 in accordance with the resonance-frequency signal of the quartz-crystal resonator 16 and is radiated from the antenna 11. In the receiver E1 of the controller, the amplitude-modulated high-frequency signal is received via the antenna A4, and the tire temperature is calculated by extracting the resonance-frequency signal via a demodulator (not shown in the drawings). Here, a procedure in the case where the tire temperature is calculated will be described.

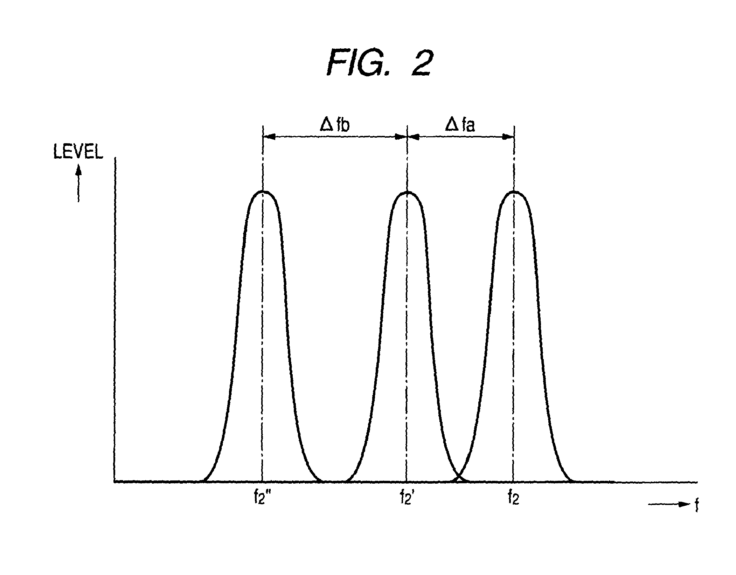

In the case where the tire temperature is calculated, in the receiver E1, a difference (a difference in frequency) between the frequency (f2) of the oscillation signal generated from the oscillator G2 of the controller and a resonance frequency (f2') extracted from a received signal of the transponder 10 is estimated. Namely, when the tire temperature varies, a variation of the resonance frequency of the quartz-crystal resonator 16 varies, whereby as shown in Fig. 2, a difference between the resonance frequency (f2') and the frequency (f2) which should be originally detected (Δfa shown in Fig. 2) is estimated. Therefore, it is possible to adequately calculate the tire temperature by using the single quartz-crystal resonator 16.

In the case where the tire temperature is calculated, for example, a table illustrating a relation between a resonance-frequency difference and the tire-temperature variation is prepared in advance, and then it is preferable to refer this table. Since the resonance frequency of the quartz-crystal resonator varies with a temperature, when a difference with the oscillation signal increases, an intensity of the received signal may decrease sometimes. At that time, it needs to change the frequency of the oscillation signal a little and measure it again.

Meanwhile, when the tire pressure is measured, in the controller, the carrier wave (f1) of 2.4GHz is amplitude-modulated by the oscillation signal (the oscillation signal having the mean frequency of 9.800 MHz) of the frequency (f2) and the oscillation signal (a oscillation signal having a mean frequency of 10.800 MHz) of the frequency (f3) generated by the oscillator G2, and then the amplitude-modulated high-frequency signal is radiated from the antenna A1. Then, at the time point t3 as shown in Fig. 3, an amplitude modulation by the oscillation signal of the frequency (f2) is stopped, and then at the time point t4, the receiver **E1** becomes an active state. Additionally, at the time of the amplitude modulation, by using the oscillation signal of the frequency (f2) is stopped, an amplitude-modulated high-frequency signal of 2.4 GHz is radiated from the antenna A1 by the oscillation signal of the frequency (f3).

In the same way, when measuring the tire temperature, in the transponder 10, the high-frequency signal of 2.4GHz which is amplitude-modulated by using the controller is detected by the diode 12, and also the carrier wave of 2.4GHz is removed by the low-pass filter (the coil 13 and the capacitor 14). Accordingly, a oscillation signal which is the same as the oscillation signal of the frequency (f2) and the frequency (f3) is extracted.

Meanwhile, in the resonance circuit 30, since the resonance frequency is similar to the oscillation signal of the frequency (f3), it is excited by the signal of the frequency (f3) extracted therefrom. Accordingly, the resonance-frequency signal of the resonance circuit 30 occurs. The resonance-frequency signal of the occurring resonance circuit 30 is detected by the diode 27, and then it is converted into a direct current in the low-pass filter (the coil 28 and the capacitor 29). Accordingly, an electric charge gets charged in the capacitor 29. When a certain degree of the electric charge gets charged in the capacitor 29, the diode 19 is switched over to become an ON state. Accordingly, the quartz-crystal resonator 16 and the pressure measuring unit 20 are connected to each other, and the resonance frequency of the quartz-crystal resonator 16 which resonates in accordance with a signal of the same frequency as the oscillation signal of the extracted frequency (f2) is influenced by not only the tire temperature but also the tire pressure which is detected by the pressure measuring unit 20.

In the controller, when the amplitude modulation is stopped by the oscillation signal of the frequency (f2) and the high-frequency signal which is amplitude-modulated by the oscillation signal of the frequency (f3) is radiated from the antenna A1, in the transponder 10, the quartz-crystal resonator 16 continuously oscillates for about 1 ms or less from when the amplitude modulation due to the oscillation signal of the frequency (f2). Accordingly, the high-frequency signal which is amplitude-modulated due to the oscillation signal of the frequency (f3) from the controller is amplitude-modulated by using the diode 12 in accordance with the resonance-frequency signal of the quartz-crystal resonator 16 and is radiated from the antenna 11. In the receiver E1 of the controller, the high-frequency signal which is amplitude-modulated is received via the antenna A4, and the tire pressure is calculated by extracting the resonance-frequency signal via the demodulator (not shown). Here, a procedure in the case where the tire pressure is calculated will be described.

In the case where the tire pressure is calculated, in the receiver E1, the difference (the difference in frequency) between the resonance frequency (f2') extracted from the received signal out of the transponder 10 when calculating the tire temperature and a resonance frequency (f2") extracted from a received signal out of the transponder 10 at this time is estimated. Namely, when the diode 19 becomes an ON state and the pressure measuring unit 20 is electrically connected to the quartz-crystal resonator 16, if the tire pressure varies, the resonance frequency of the quart-crystal resonator 16 varies. Accordingly, as shown in Fig. 2, by estimating the difference (Δfb shown in Fig. 2) between the resonance frequency (f2") and the resonance frequency (f2') detected when the tire temperature is calculated, it is possible to adequately calculate the tire pressure by using the single quartz-crystal resonator 16.

Especially, in terms of comparing the resonance frequency (f2') with the resonance frequency (f2") in this way for the purpose of estimation, the known procedure of which a correcting process to correct a portion of a temperature from the measured value including the pressure which is performed by a different quartz-crystal resonator for the tire temperature and pressure can be left out, whereby different influences such as a temperature characteristic and a temporal degradation characteristic of the respective quartz-crystal resonators are not able to be influenced any more, thereby promptly and accurately calculating both the tire temperature and the tire pressure by using single quartz-crystal resonator 16.

In the case where the tire pressure is calculated, for example, a table illustrating a relation between the resonance-frequency difference and the tire-pressure variation is prepared in advance, and then it is preferable to refer to this table. Since the resonance frequency of the quartz-crystal resonator varies with the temperature and the pressure, when a difference with the oscillation signal increases, the intensity of the received signal may decrease sometimes. At that time, it needs to change the frequency of the oscillation signal by small degree and measure it again.

Likewise, according to the tire information detecting device of the embodiment, in the transponder 10, the connection between the pressure measuring unit 20 and the quartz-crystal resonator 16 is controlled in accordance with the signal from the controller by means of a control circuit which is constituted of the driving circuit 25 and the diode 19. Accordingly, the connection between the quartz-crystal resonator 16 and the pressure measuring unit 20 is controlled, whereby a resonance frequency of the quartz-crystal resonator 16 is estimated by the controller, whereby one quartz-crystal resonator 16 can calculate both the tire temperature and the tire pressure without the help of plural quartz-crystal resonators, thereby accurately detecting the tire pressure and the tire temperature.

Additionally, in the driving circuit 25, as the resonance circuit 30 resonates, the connection between the pressure measuring unit 20 and the quartz-crystal resonator 16 is controlled, whereby the resonance of the resonance circuit 30 is controlled by the controller, thereby controlling the connection between the pressure measuring unit 20 and the quartz-crystal resonator 16.

Especially, according to the tire information detecting device of the embodiment, the control circuit includes the diode 19 which is connected to an input-output terminal of the pressure measuring unit 20 on a first signal line in which the quartz-crystal resonator 16 and the pressure measuring unit 20 are connected to each other. Accordingly, an ON and OFF of the diode 19 is switched over in accordance with the resonance of the resonance circuit 30, thereby simply controlling the connection between the pressure measuring unit 20 and the quartz-crystal resonator 16.

Additionally, in the tire information detecting device according to the embodiment, the transponder 10 includes a second signal line which bypasses the first signal line between the input-output terminal of the pressure measuring unit 20 side of the diode 12 on the first line and the input-output terminal of the diode 19, and is connected to an end of the resonance circuit 30 on the second signal line. Accordingly, the ON and OFF of the diode 19 can be switched over by the resonance circuit 30 of which an end thereof is connected to the second signal line, whereby this does not influence the signal which communicates via the first signal line, thereby controlling the connection between the pressure measuring unit 20 and the quartz-crystal resonator 16.

The invention is not limited to the above-described embodiment, and may be modified to various forms of the embodiment, if necessary. In the above-described embodiment, the circuit configuration or the like as shown in the attached drawings is not limited to the above-described embodiment, and may be adequately modified to various forms as long as the effect of the invention is available. Moreover, the above-described embodiment may be modified within the object of the invention.

For example, in the tire information detecting device according to the above-described embodiment, the transponder comprise an LC resonance circuit which is connected in parallel to the quartz-crystal resonator 16 so as to form the resonance circuit 30, but the resonance circuit which is connected in parallel to the quartz-crystal resonator 16 is not limited to this, and may be adequately modified. For example, the LC resonance circuit may be replaced with a piezoelectric resonator. However, from the viewpoint of reducing the increase of cost, the LC resonance circuit as the above-described embodiment may be utilized.

In addition, in the tire information detecting device according to the above-described embodiment, the diode 19 is used as a switching element which switches the connection between the quartz-crystal resonator 16 and the pressure measuring unit 20. Therefore, it is possible to reduce the cost which is necessary for the switching element. However, the switching element is not limited to this, and may be adequately modified. For example, the diode 19 may be replaced with a FET or the like.

Additionally, in the tire information detecting device according to the above-described embodiment, although the detecting resonance circuit comprises the quartz-crystal resonator, the detecting resonance circuit is not limited to this, and may be replaced with such as a piezoelectric single crystal resonator which is made of a piezoelectric single crystal of a lithium tantalite (LiT-aO₃), a lithium niobate (LiNbO₃), a lithium borate (Li₂B₄O₇), a potassium niobate (KNbO₃), a langasite crystal (La₃Ga₅SiO₁₄), and a langanite (La₃Nb_{0.5}Ga_{5.5}O₁₄), a resonance circuit which includes a ceramic resonator, and an LC resonance circuit. The quartz-crystal resonator is selected because its resonance is stable to guarantee the detection precision.

Fig. 4 is a drawing illustrating a modified example of the circuit configuration of the transponder 10 which constitutes the tire information detecting device according to the embodiment. In Fig. 4, the transponder 10 includes a MOSFET as a switching element. Additionally, the configuration element in Fig. 4 same as that of Fig. 1 will be marked with the same numerals and a description related to that will be omitted.

In the circuit configuration of the transponder 10 shown in Fig. 4, the fact that a MOSFET 33 instead of the diode 10 shown in Fig. 1 is connected and the resistor 21 constituting the pressure measuring unit shown in Fig. 1 is omitted is different from the circuit configuration in the transponder 10 shown in Fig. 1. Likewise, in the case where the MOSFET 33 instead of the diode 10 is utilized, when a certain degree of charge is charged in the capacitor 29 with response of the resonance circuit 30, the MOSFET 33 becomes an ON state. Consequently, the tire pressure which is detected by the pressure measuring unit 20 influences the resonance frequency of the quartz-crystal resonator 16, thereby obtaining the same function and effect as the above-described embodiment.

## Claims

1. A tire information detecting device comprising:
a measured value transmitter which is mounted on a tire of a vehicle;
a controller which is formed in a main body of the vehicle so as to transmit and receive a signal to and from the measured value transmitter,
wherein the measured value transmitter includes an antenna, a modulator and a demodulator used to transmit and receive the signal to and from the controller, a pressure measuring unit for measuring a tire pressure, a detecting resonance circuit which is connected between the modulator and the pressure measuring unit and which resonates in response to the signal from the controller, a connecting resonance circuit which resonates in response to the signal from the controller, and a control circuit for controlling a connection between the pressure measuring unit and the detecting resonance circuit with the resonance of the connecting resonance circuit.

2. The tire information detecting device according to claim 1, wherein the control circuit includes a switching element which is connected to an input-output terminal of the pressure measuring unit on a first signal line connected to the detecting resonance circuit and the pressure measuring unit, and the pressure measuring unit is connected to the detecting resonance circuit by turning on the switching element at the time of resonance of the connecting resonance circuit, and the pressure measuring unit is disconnected from the detecting resonance circuit by turning off the switching element at the time of non-resonance of the connecting resonance circuit.

3. The tire information detecting device according to claim 2, wherein the measured value transmitter transmits a signal of a resonance frequency of the detecting resonance circuit to the controller when the switching element is turned off and transmits a signal of a resonance frequency of the detecting resonance circuit in accordance with the measurement result of the pressure measuring unit to the controller when the switching element is turned on.

4. The tire information detecting device according to claim 2 or 3, wherein the measured value transmitter includes a second signal line which bypasses the first signal line between an input-output terminal of the modulator close to the pressure measuring unit in the first signal line and an input-output terminal of the switching element close to the detecting resonance circuit, and connects an end of the connecting resonance circuit to the second signal line.

5. The tire information detecting device according to one of claims 1 to 4, wherein the connecting resonance circuit includes an LC resonance circuit.

6. The tire information detecting device according to one of claims 1 to 5, wherein the connecting resonance circuit includes a piezoelectric resonator.

7. The tire information detecting device according to one of claims 2 to 4, wherein the switching element includes a diode.

8. The tire information detecting device according to one of claims 2 to 4, wherein the switching element includes an FET.

9. The tire information detecting device according to one of claims 1 to 8, wherein the controller transmits a signal for allowing the detecting resonance circuit and the connecting resonance circuit to resonate to the measured value transmitter, receives a signal of a resonance frequency of the detecting resonance circuit and a signal of a resonance frequency of the detecting resonance circuit in accordance with the measurement result of the pressure measuring unit from the measured value transmitter, and calculates a temperature and a pressure of the tire by the use of the resonance frequency of the detecting resonance circuit extracted from the received signal.

10. The tire information detecting device according to claim 9, wherein the controller calculates the temperature of the tire by the use of a difference in frequency between the frequency at signal for allowing the detecting resonance circuit to resonate and the resonance frequency extracted from the received signal in response to the signal.

11. The tire information detecting device according to claim 9 or 10, wherein the controller calculates the pressure of the tire by the use of a difference in frequency between the resonance frequency extracted from the received signal in response to the signal for allowing the detecting resonance circuit to resonate and the resonance frequency extracted from the received signal in response to the signal for allowing the detecting resonance circuit to resonate in accordance with the measurement result of the pressure measuring unit.

12. The tire information detecting device according to one of claims 1 to 11, wherein the detecting resonance circuit includes a quartz-crystal resonator.
